# EUROPEAN PATENT SPECIFICATION

(11) **EP 3 419 228 B1**
(45) Date of publication and mention of the grant of the patent: **21.10.2020**
(21) Application number: 16893875.1
(22) Date of filing: 15.03.2016
(51) Int. Cl.: H04L 12/723, H04L 12/721, H04Q 11/00

(54) **SERVICE PATH ESTABLISHMENT METHOD, NODE DEVICE, AND SYSTEM**
VERFAHREN ZUR HERSTELLUNG EINES DIENSTPFADES, KNOTENVORRICHTUNG UND SYSTEM
PROCÉDÉ, DISPOSITIF DE NOEUD ET SYSTÈME D'ÉTABLISSEMENT DE CHEMIN DE SERVICE

(43) Date of publication of application: 26.12.2018
(73) Proprietor: Huawei Technologies Co., Ltd., Longgang District Shenzhen, Guangdong 518129 (CN)
(72) Inventor: ZHANG, Xian, Shenzhen Guangdong 518129 (CN)
(74) Representative: Maiwald Patent- und Rechtsanwaltsgesellschaft mbH
(86) International application number: PCT/CN2016/076400
(87) International publication number: WO 2017/156710

(56) References cited:
- EP-A1- 1 351 458
- EP-A2- 1 780 960
- CN-A- 1 725 727
- CN-A- 101 030 939
- CN-A- 101 030 939
- CN-A- 102 299 852
- CN-A- 102 487 329
- US-A1- 2012 163 165
- US-B1- 8 693 374
- US-B1- 9 253 097

## Description

### TECHNICAL FIELD

The present invention relates to the communications field, and in particular, to a service path establishment method, a node device, and a system.

### BACKGROUND

Multiple transmission technologies such as a Synchronous Digital Hierarchy (SDH), an Optical Transport Network (OTN), and Wavelength Division Multiplexing (WDM) may be used in a transport network. A conventional transport network includes only a management plane and a transport plane, and requires a network administrator to control and manage the transport plane by using software of the management plane, so as to implement creation, management, removal, and the like of a service path. A control plane is introduced in the transport network such as the OTN, so as to support automatic topology discovery, automatic service path establishment, fast rerouting, and the like. The optical network that includes the control plane is referred to as an Automatically Switched Optical Network (ASON).

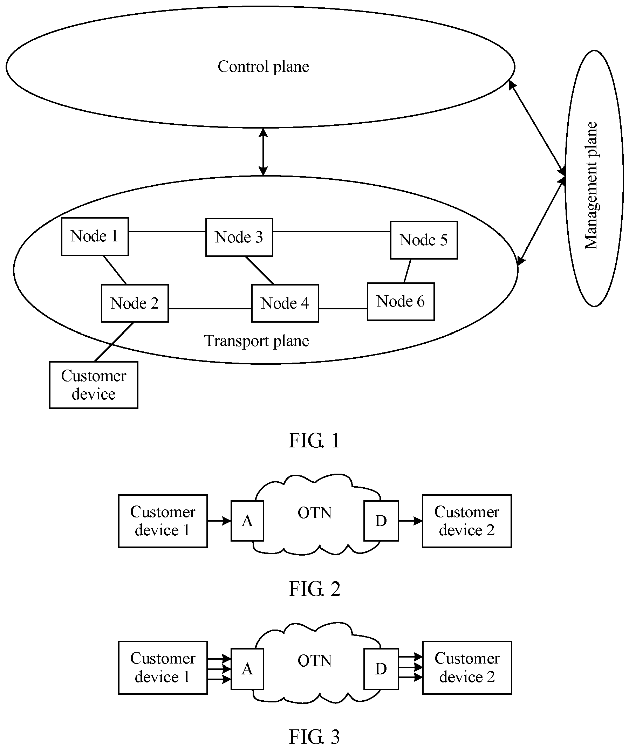

As shown in FIG. 1, an ASON network architecture includes a management plane, a control plane, and a transport plane. The Internet Engineering Task Force (IETF) further defines a Generalized Multi-Protocol Label Switching (GMPLS) protocol, used to provide a network control function for the ASON. The GMPLS protocol includes a routing protocol, a signaling protocol, and the like. The routing protocol such as the Open Shortest Path First-Traffic Engineering (OSPF-TE) protocol is used to enable network nodes to obtain network information such as node information, link information, and bandwidth information, so as to support distributed route computation. The signaling protocol such as the Resource Reservation Protocol-Traffic Engineering (RSVP-TE) is used to implement distributed path establishment, that is, information exchange is performed hop-by-hop between nodes, so as to implement path establishment from a source node to a sink node.

With development of transmission technologies, bandwidth and types of customer services carried by an OTN network are becoming richer. For example, in a flexible OTN (flex-OTN) network, a service type of access by using a single data interface is currently supported. As shown in FIG. 2, a service between a customer device 1 and a customer device 2 accesses an OTN network by using a single data interface, and a service path may be established by using the GMPLS protocol. The flex-OTN further needs to support a service type of access by using multiple data interfaces. As shown in FIG. 3, a service between a customer device 1 and a customer device 2 accesses an OTN network by using multiple data interfaces. If a service path is established by using the existing GMPLS protocol, each data interface is corresponding to an independent service path. Service paths between different data interfaces are mutually independent. This causes performance inconsistency of the service paths and performance degradation of a carried service, and further increases difficulty in maintenance of the service paths.
US9253097 discloses a method of establishing a plurality of label switched paths (LSPs) having a common transit network device other than an ingress network device or an egress network device of any of the plurality of LSPs, and, by the transit network device along the plurality of LSPs, detecting a congestion condition on a link along the plurality of LSPs and coupled to the transit network device. After detecting the congestion condition, the transit network device selects a subset of the plurality of LSPs to evict from the link.
CN101030939A discloses a method for establishing a set of LSPs having the same ingress node and egress node. The ingress node computes at least a set of routes passing the same nodes, and establishes a set of LSPs along each route.
EP1351458A1 discloses a technique for differentiating LSPs that contribute to congestion at an OBS node by defining shared wavelengths groups that dedicate a certain group of wavelengths to each LSP.
US8693374B1 discloses a centralized controller that provides seamless end-to-end service from a core-facing edge of a service provider network through aggregation and access infrastructure out to access nodes located proximate to the subscriber devices. The controller operates to provide a central configuration point for configuring aggregation nodes (AGs) of a network of the service provider so as to provide transport services to transport traffic between access nodes (AXs) and edge routers on opposite borders of the network.
US2012163165A1 discloses a packet processing apparatus for transmitting packets received from a plurality of networks through a Label Switched Path (LSP). The packet processing apparatus classifies a received packet to a control packet or a normal packet based on port information included in field information of the received packet.

### SUMMARY

The invention is defined by the appended claims. In view of this, embodiments of the present invention provide a service path establishment method, a node device, and a system, so as to resolve a problem that performance of a service carried by a service path is low and maintenance of the service path is difficult.

According to a first aspect, an embodiment of the present invention provides a service path establishment method, including: receiving, by a network controller, a service path request message of a first label switched path LSP, where the first LSP has a service association attribute, the service association attribute of the first LSP indicates that the first LSP includes at least two second LSPs, and the first LSP and the at least two second LSPs have a same first node and last node; computing, by the network controller, routing information of the second LSPs; and sending, by the network controller, the routing information of the second LSPs to a first node, so that the first node establishes the first LSP according to the routing information of the second LSPs.

The first LSP has a service association attribute, and the first LSP includes at least two second LSPs, so as to ensure that service performance of any two second LSPs is similar or consistent, thereby improving service performance of the first LSP, and simplifying maintenance and management of a service path.

In a possible implementation, the service association attribute of the first LSP indicates a quantity of second LSPs included in the first LSP.

In a possible implementation, the service association attribute of the first LSP indicates that the second LSPs included in the first LSP have same routing information.

The second LSPs have same routing information, that is, all first nodes, last nodes, intermediate nodes, and links that are passed through by the second LSPs are the same, so as to ensure that service performance of the second LSPs is consistent, thereby ensuring service performance of the first LSP.

In a possible implementation, the service association attribute of the first LSP indicates that a service performance difference between any two second LSPs included in the first LSP falls within a preset threshold range.

A service performance difference between any two second LSPs falls within a preset range, so as to ensure that service performance of any two second LSPs is similar, thereby ensuring service performance of the first LSP.

In a possible implementation, the method further includes: when route computation for at least any second LSP that is associated with the first LSP fails, determining, by the network controller, that the service path request of the first LSP fails.

According to a second aspect, an embodiment of the present invention provides a service path establishment method, including: sending, by a first node, a service path request message of a first label switched path LSP to a network controller, where the first LSP has a service association attribute, the service association attribute of the first LSP indicates that the first LSP includes at least two second LSPs, and the first LSP and the at least two second LSPs have a same first node and last node; receiving, by the first node, routing information of the second LSPs from the network controller; and establishing, by the first node, the first LSP according to the routing information of the second LSPs.

The first LSP has a service association attribute, and the first LSP includes at least two second LSPs, so as to ensure that service performance of any two second LSPs is similar or consistent, thereby improving service performance of the first LSP, and simplifying maintenance and management of a service path.

In a possible implementation, the service association attribute of the first LSP indicates a quantity of second LSPs included in the first LSP.

In a possible implementation, the service association attribute of the first LSP indicates that the second LSPs included in the first LSP have same routing information.

The second LSPs have same routing information, that is, all first nodes, last nodes, intermediate nodes, and links that are passed through by the second LSPs are the same, so as to ensure that service performance of the second LSPs is consistent, thereby ensuring service performance of the first LSP.

In a possible implementation, the service association attribute of the first LSP indicates that a service performance difference between any two second LSPs included in the first LSP falls within a preset threshold range.

A service performance difference between any two second LSPs falls within a preset range, so as to ensure that service performance of any two second LSPs is similar, thereby ensuring service performance of the first LSP.

In a possible implementation, the method further includes: learning, by the first node, that at least one second LSP in the first LSP is faulty, and sending a rerouting request message to the network controller, where the rerouting request message instructs to re-establish the at least one second LSP that is faulty.

According to a third aspect, an embodiment of the present invention provides a network controller, including: a receiving module, configured to receive a service path request message of a first label switched path LSP, where the first LSP has a service association attribute, the service association attribute of the first LSP indicates that the first LSP includes at least two second LSPs, and the first LSP and the at least two second LSPs have a same first node and last node; a computation module, configured to compute routing information of the second LSPs; and a sending module, configured to send the routing information of the second LSPs to a first node, so that the first node establishes the first LSP according to the routing information of the second LSPs.

The first LSP has a service association attribute, and the first LSP includes at least two second LSPs, so as to ensure that service performance of any two second LSPs is similar or consistent, thereby improving service performance of the first LSP, and simplifying maintenance and management of a service path.

In a possible implementation, the service association attribute of the first LSP indicates a quantity of second LSPs included in the first LSP.

In a possible implementation, the service association attribute of the first LSP indicates that the second LSPs included in the first LSP have same routing information.

The second LSPs have same routing information, that is, all first nodes, last nodes, intermediate nodes, and links that are passed through by the second LSPs are the same, so as to ensure that service performance of the second LSPs is consistent, thereby ensuring service performance of the first LSP.

In a possible implementation, the service association attribute of the first LSP indicates that a service performance difference between any two second LSPs included in the first LSP falls within a preset threshold range.

A service performance difference between any two second LSPs falls within a preset range, so as to ensure that service performance of any two second LSPs is similar, thereby ensuring service performance of the first LSP.

In a possible implementation, the network controller further includes: a determining module, configured to: when route computation for at least any second LSP that is associated with the first LSP fails, determine that the service path request of the first LSP fails.

According to a fourth aspect, an embodiment of the present invention provides a node device, including: a sending module, configured to send a service path request message of a first label switched path LSP to a network controller, where the first LSP has a service association attribute, the service association attribute of the first LSP indicates that the first LSP includes at least two second LSPs, and the first LSP and the at least two second LSPs have a same first node and last node; a receiving module, configured to receive routing information of the second LSPs from the network controller; and an LSP establishment module, configured to establish the first LSP according to the routing information of the second LSPs.

The first LSP has a service association attribute, and the first LSP includes at least two second LSPs, so as to ensure that service performance of any two second LSPs is similar or consistent, thereby improving service performance of the first LSP, and simplifying maintenance and management of a service path.

In a possible implementation, the service association attribute of the first LSP indicates a quantity of second LSPs included in the first LSP.

In a possible implementation, the service association attribute of the first LSP indicates that the second LSPs included in the first LSP have same routing information.

The second LSPs have same routing information, that is, all first nodes, last nodes, intermediate nodes, and links that are passed through by the second LSPs are the same, so as to ensure that service performance of the second LSPs is consistent, thereby ensuring service performance of the first LSP.

In a possible implementation, the service association attribute of the first LSP indicates that a service performance difference between any two second LSPs included in the first LSP falls within a preset threshold range.

A service performance difference between any two second LSPs falls within a preset range, so as to ensure that service performance of any two second LSPs is similar, thereby ensuring service performance of the first LSP.

In a possible implementation, the node device further includes: a fault learning module, configured to learn that at least one second LSP in the first LSP is faulty; and the sending module is further configured to send a rerouting request message to the network controller, where the rerouting request message instructs to re-establish the at least one second LSP that is faulty.

According to a fifth aspect, an embodiment of the present invention provides a network controller, including: a processor, a memory, a bus, and a communications interface, where the memory is configured to store a computer executable instruction, the processor and the memory are connected by using the bus, and when a computer runs, the processor executes the computer executable instruction stored in the memory, so that the computer executes the method in any one of the first aspect or the possible implementations of the first aspect.

According to a sixth aspect, an embodiment of the present invention provides a node device, including: a processor, a memory, a bus, and a communications interface, where the memory is configured to store a computer executable instruction, the processor and the memory are connected by using the bus, and when a computer runs, the processor executes the computer executable instruction stored in the memory, so that the computer executes the method in any one of the second aspect or the possible implementations of the second aspect.

According to a seventh aspect, an embodiment of the present invention provides a network system, including: the network controller in any one of the third aspect or the possible implementations of the third aspect and the at least two node devices in any one of the fourth aspect or the possible implementations of the fourth aspect.

According to the technical solutions provided in the embodiments of the present invention, in a process of establishing the first LSP, the network controller and/or the node device establish/establishes at least two second LSPs that are associated with the first LSP, so as to ensure that service performance of any two second LSPs is similar or consistent, thereby improving service performance of the first LSP, and simplifying maintenance and management of a service path.

### BRIEF DESCRIPTION OF DRAWINGS

To describe the technical solutions in the embodiments of the present invention or in the prior art more clearly, the following briefly describes the accompanying drawings required for describing the background and the embodiments.
FIG. 1 is a schematic diagram of an ASON network architecture in the prior art;
FIG. 2 is an implementation in which a customer service accesses an OTN network in the prior art;
FIG. 3 is another implementation in which a customer service accesses an OTN network in the prior art;
FIG. 4 is a schematic structural diagram of a network device according to an embodiment of the present invention;
FIG. 5 is a schematic diagram of a network topology according to an embodiment of the present invention;
FIG. 6 is a signaling interaction flowchart of a service path establishment method according to an embodiment of the present invention;
FIG. 7 is a schematic diagram of a field format of an associated object according to an embodiment of the present invention;
FIG. 8 is a schematic diagram of a field format of an associated object according to an embodiment of the present invention;
FIG. 9 is a signaling interaction flowchart of a service path fault processing method according to an embodiment of the present invention;
FIG. 10 is a schematic diagram of a network topology according to an embodiment of the present invention;
FIG. 11 is a schematic flowchart of a service path establishment method according to an embodiment of the present invention;
FIG. 12 is a schematic flowchart of a service path establishment method according to an embodiment of the present invention;
FIG. 13 is a schematic structural diagram of a network controller according to an embodiment of the present invention;
FIG. 14 is a schematic structural diagram of a node device according to an embodiment of the present invention;
FIG. 15 is a schematic structural diagram of a computer device according to an embodiment of the present invention; and
FIG. 16 is a schematic structural diagram of a network system according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments.

An embodiment of the present invention may be applied to an ASON network architecture that includes a control plane. As shown in FIG. 1, the ASON network architecture includes a management plane, a control plane, and a transport plane. The transport plane is constituted by a series of transport entities, for example, Traffic Engineering (TE) links between nodes. The transport plane provides a service transmission channel that can carry end-to-end unidirectional or bidirectional service data of a customer device. The customer device accesses a node (for example, a node 2) of the transport plane by using a User Network Interface (UNI). The customer device uses the UNI to dynamically request to obtain, cancel, and modify an optical bandwidth connection resource with a specific characteristic. The management plane, that is, a platform used by a network administrator to manage a network, may be separately connected to the control plane and the transport plane by using a Network Management Interface (NMI), so as to manage the control plane and the transport plane. The control plane may be constituted by an independent network controller, multiple control plane components, or an independent network controller and multiple control plane components. A network controller and a control plane component, or different control plane components are connected by using a control channel. The control plane and the transport plane are connected by using a Connection Control Interface (CCI). The control plane sends a switching control command to the transport plane by using the CCI, or the transport plane sends resource status information to the control plane by using the CCI.

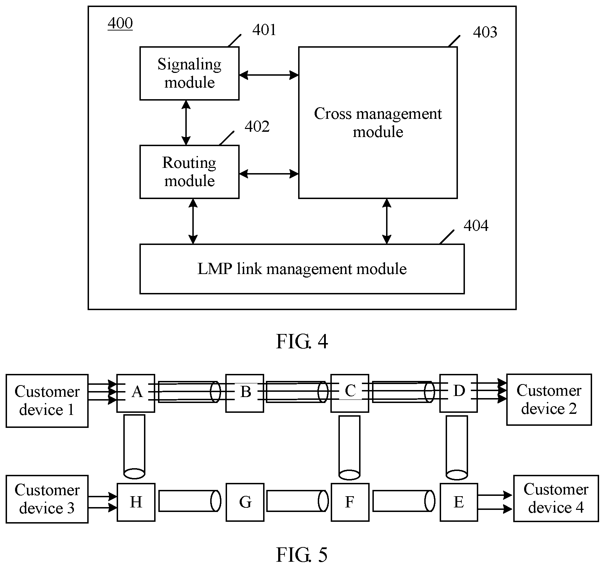

FIG. 4 is a schematic structural diagram of a network device according to an embodiment of the present invention. As shown in FIG. 4, the network device 400 may be a network device in an OTN, an SDH, or WDM; or the network device 400 may be a network device in an ASON that includes a transport plane and a control plane. The network device 400 may include a signaling module 401, a routing module 402, a cross management module 403, and an LMP (Link Management Protocol) link management module 404. The signaling module 401 can implement a function such as service path establishment or service path removal by using the RSVP-TE protocol, and can implement service synchronization and restoration functions according to a service status change. The routing module 402 can collect and flood TE link information of the transport plane and control link information of the control plane by using the OSPF-TE protocol. In addition, the routing module 402 may compute a service route according to a TE link of an entire network. The cross management module 403 can establish a cross connection, delete a cross connection, report link status information and alarm information, and so on. The LMP link management module 404 can create and maintain a control channel by using an LMP protocol, so as to verify a TE link.

FIG. 5 is a schematic diagram of a network topology according to an embodiment of the present invention. As shown in FIG. 5, a transport network includes multiple node devices A, B, C, D, E, F, G, and H, for example, an OTN device. The node devices are connected by using a physical link, that is, a TE link. The transport network may further include a network controller. The node devices may be managed and controlled by the network controller. A customer-side network includes customer devices 1, 2, 3, and 4, for example, a data center and a router. The customer devices may be independently deployed or controlled by another network controller. It is assumed that a 300 Gbps service between the customer device 1 and the customer device 2 accesses the transport network by using three data interfaces, and bandwidth of each data interface is 100 Gbps; and a 200 Gbps service between the customer device 3 and the customer device 4 accesses the transport network by using two data interfaces, and bandwidth of each data interface is 100 Gbps.

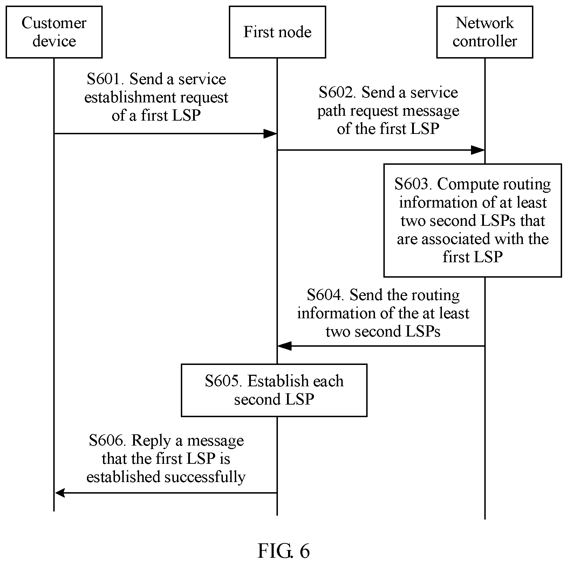

FIG. 6 is a signaling interaction flowchart of a service path establishment method according to an embodiment of the present invention. As shown in FIG. 6, the method may be implemented based on the network topology shown in FIG. 5, and specifically includes the following steps.

S601. A customer device sends a service establishment request of a first LSP to a first node.

For example, when a service of a 300 Gbps first Label Switched Path (LSP) is to be established between a customer device 1 and a customer device 2, the customer device 1 may send a service establishment request of the first LSP to a node A that is directly connected to the customer device 1. The 300 Gbps LSP accesses the node A of a transport network by using three data interfaces. The 300 Gbps LSP is represented as N*M Gbps LSP, where N = 3, and M = 100. Herein, N represents a quantity of data interfaces of a node device in a transport plane, and M represents a rate of one data interface. Herein, rates of the data interfaces may be the same. Certainly, the rates of the data interfaces may also be different. Therefore, three 100 Gbps LSPs need to be established. In addition, the three 100 Gbps LSPs are associated with the 300 Gbps LSP, that is, the 300 Gbps LSP includes the three 100 Gbps LSPs.

In this embodiment, the first LSP may be one 300 Gbps LSP, and a second LSP may be three 100 Gbps LSPs. The first LSP has a service association attribute, and may be represented by using an associated object in a related protocol message.

The customer device 1 may request the node A to establish an LSP with 300 Gbps bandwidth from the customer device 1 to the customer device 2. The node A is a first node of the 300 Gbps LSP in the transport network. Alternatively, the customer device 1 may request the node A to establish three LSPs with 100 Gbps bandwidth each from the customer device 1 to the customer device 2. The node A is a first node of the 100 Gbps LSPs in the transport network.

Optionally, if the customer device 1 requests the node A to establish an LSP with 300 Gbps bandwidth, the service establishment request of the first LSP sent to the node A by the customer device 1 may carry a source node (customer device 1), a sink node (customer device 2), and bandwidth (300 Gbps) of one LSP.

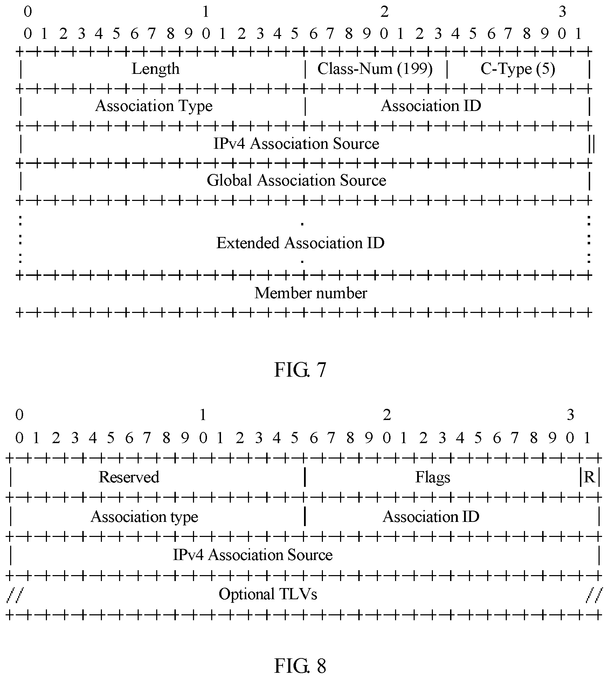

Optionally, if the customer device 1 requests the node A to establish three LSPs with 100 Gbps bandwidth each, the service establishment request of the first LSP sent to the node A by the customer device 1 carries a source node (customer device 1), a sink node (customer device 2), and bandwidth (100 Gbps) of three LSPs, and may further carry an associated object of the first LSP. For example, when requesting the node A to establish three LSPs with 100 Gbps bandwidth each from the customer device 1 to the customer device 2, the customer device 1 may send three PATH messages to the node A by using a signaling protocol (for example, the RSVP-TE protocol). Each PATH message instructs to establish an LSP with 100 Gbps bandwidth from the customer device 1 to the customer device 2. Each PATH message may further carry an associated object of the first LSP. For example, as shown in FIG. 7, an associated object in the RSVP-TE protocol may include the following fields:
C-Type: defines two new Class-Types, which are Class-Types corresponding to IPv6 and IPv4. For example, a value of C-Type may be 5, 6, or the like.

Association Type: may have a length of 16 bits, and represents an association type. For example, the association type is ensuring optimal service performance. That is, LSPs have same routing information, and all nodes (first node, last node, and intermediate node) and links that are passed through are the same. For another example, the association type is ensuring that service performance falls within a threshold range. That is, LSPs do not necessarily have identical routing information. For example, the LSPs have a same first node and a same last node, but may pass through some different intermediate nodes. A service performance (such as a delay or a bit error rate) difference between the LSPs needs to be within a preset threshold range.

Association ID: may have a length of 16 bits, and represents an association identifier. The association identifier may be a unique identifier allocated by a node, a controller, or the like, and may globally and uniquely identify the associated object with reference to an identifier of the node or the network controller.

IPv4 (or IPv6) Association Source: may have a length of 32 bits or 128 bits, and represents a source that generates an associated object, that is, a subject that generates an associated object, for example, a customer device, a node, or a network controller.

Member number: may have a length of 16 bits, and represents a quantity of associated members, for example, a quantity of 100 Gbps LSPs included in a 300 Gbps LSP.

Extended Association ID: has a variable length that may be integer multiple of 32 bits, and represents an association identifier. When the length of the Association ID is not long enough, extended representation is performed in this field.

S602. The first node sends a service path request message of the first LSP to a network controller.

The first node A in the transport network sends the service path request message of the first LSP to the network controller, and may request the network controller to establish one first LSP with 300 Gbps bandwidth from the first node A to a last node D. Alternatively, the first node A may request the network controller to establish three second LSPs with 100 Gbps bandwidth each from the first node A to a last node D.

Optionally, if the first node A requests the network controller to establish one LSP with 300 Gbps bandwidth, the service path request message of the first LSP sent to the network controller by the first node A may carry a first node (node A), a last node (node D), and bandwidth (300 Gbps) of one LSP.

Optionally, if the first node A requests the network controller to establish three LSPs with 100 Gbps bandwidth each, the service path request message of the first LSP sent to the network controller by the first node A may carry first nodes (node A), last nodes (node D), and bandwidth (100 Gbps) of three LSPs, and may further carry an associated object of the first LSP. For example, when requesting the network controller to establish three LSPs with 100 Gbps bandwidth each from the first node A to the last node D, the node A may send the service path request message of the first LSP to the network controller by using the Path Computation Element Communication Protocol (Path Computation Element Communication Protocol, PCEP). The service path request message of the first LSP may be represented by using one message, or may be represented by using multiple messages. The service path request message of first LSP may be a PCReq message. The associated object of the first LSP may be represented in the PCEP protocol. For example, as shown in FIG. 8, an associated object in the PCEP protocol may include the following fields:
Association type: represents an association type, and has a same meaning as the Association Type of the associated object in the RSVP-TE protocol.
Association ID: represents an association identifier, and has a same meaning as the Association ID of the associated object in the RSVP-TE protocol.
IPv4 (or IPv6) Associattion Source: has a same meaning as the IPv4 (or IPv6) Associattion Source of the associated object in the RSVP-TE protocol.
Optional TLVs: A new TLV may be added, and the newly added TLV carries a Member number, which has a same meaning as the Member number of the associated object in the RSVP-TE protocol.

Alternatively, the service path request message of the first LSP sent to the network controller by the first node may be an LSP authorization message. The LSP authorization message may further instruct to authorize the network controller. The network controller may determine whether the 300 Gbps LSP has a service association attribute (that is, whether the first LSP includes multiple second LSPs), and may further determine information about the associated object of the first LSP. For example, for the 300 Gbps LSP, the network controller may determine to establish multiple LSPs associated with the 300 Gbps LSP, including a quantity of LSPs that need to be established, bandwidth of each LSP, an association type, and the like. In this way, a field such as an association identifier, an association type, or a quantity of associated members in the associated object of the first LSP carried in the LSP authorization message may be null, or the LSP authorization message carries an authorization identifier and does not carry the associated object of the first LSP.

S603. According to the service path request message of the first LSP, the network controller computes routing information of at least two second LSPs that are associated with the first LSP.

After the network controller receives the service path request message of the first LSP sent by the first node A, if the service path request message of the first LSP carries the associated object of the first LSP, the network controller learns, from the service path request message of the first LSP, that three second LSPs with 100 Gbps bandwidth each from the first node A to the last node D are established for the first LSP with 300 Gbps bandwidth. In this case, the first LSP has a service association attribute, that is, the first LSP includes three second LSPs.

If the service path request message of the first LSP sent to the network controller by the first node does not carry the associated object of the first LSP, the network controller may determine whether the first LSP has a service association attribute (that is, whether the first LSP includes multiple second LSPs), and may further determine the information about the associated object of the first LSP.

It is assumed that three 100 Gbps second LSPs are established for the 300 Gbps first LSP. The network controller performs batch path computation according to current network resource information. For example, when the association type is ensuring optimal service performance, the three LSPs are computed to have same routing information. That is, all nodes and links that are passed through by each LSP in the three LSPs are the same. For example, the routing information of each of the three LSPs is A-B-C-D, but timeslot resources used by different LSPs may be different.

For example, when the association type is ensuring that service performance falls within a threshold range, it is computed that the three LSPs do not necessarily have identical routing information, and it only needs to ensure that the three LSPs have a same first node and a same last node and a service performance difference between the three LSPs falls within a preset threshold range. For example, routing information of one LSP of the three LSPs is A-B-C-F-E-D, and routing information of the other two LSPs is A-B-C-D. A service performance difference between any two LSPs of the three LSPs falls within the preset threshold range.

S604. The network controller sends the routing information of the at least two second LSPs to the first node.

After computation for the routing information of each second LSP (100 Gbps LSP) included in the first LSP (300 Gbps LSP) is successful and resource allocation is successful, the network controller sends a service path computation result to the first node A. The service path computation result includes the routing information of each second LSP (100 Gbps LSP).

When the first node A authorizes the network controller to determine the service association attribute of the first LSP, that is, when the first node fails to determine the service association attribute of the first LSP, the associated object of the first LSP may be carried in the service path computation result sent to the node A by the network controller. When the service path computation result sent to the node A by the network controller may be a PCRep message or a PCUpd message, the PCRep message or the PCUpd message may further carry the associated object of the first LSP.

S605. The first node establishes each second LSP according to the routing information of the at least two second LSPs.

After receiving the routing information that is of the at least two second LSPs and that is computed by the network controller, the first node A may establish each second LSP by using a signaling protocol (for example, the RSVP-TE protocol). In the signaling protocol for establishing the second LSP, the associated object of the first LSP may be carried, so that each node passed through by the second LSP can obtain the associated object of the first LSP.

For example, three LSPs whose routing information is A-B-C-D and whose bandwidth is 100 Gbps are established, and nodes A, B, C, and D obtain associated object information in a process of establishing the LSPs. The associated object information includes: that a 300 Gbps LSP includes three 100 Gbps LSPs, an association identifier (for example, a service 1), an association type (for example, ensuring optimal service performance), and the like. After the nodes obtain the associated object information, it is beneficial for the nodes to perform distributed management such as rerouting on the established LSPs.

S606. The first node replies to the customer device with a message that the first LSP is established successfully.

When all second LSPs in the first LSP are established successfully, the first LSP is established successfully, and the first node may reply to the customer device with the message that the first LSP is established successfully. For example, when three 100 Gbps LSPs are established successfully, a 300 Gbps LSP is established successfully, and the first node A may reply to the customer device 1 with an RESV message, which indicates that the 300 Gbps LSP is established successfully. The customer device may use these LSPs to transmit service data.

In this embodiment, the network controller may include a Path Computation Element (PCE). The PCE is a centralized path computation element and configured to compute routing information of a service path, or the PCE may be an independent component. In a PCE initiation mode, the service establishment request of the first LSP may be directly sent to the network controller by the customer device, a customer controller, or network management software. In this case, S601 and S602 do not need to be performed. The service establishment request of the first LSP may carry the associated object of the first LSP. The network controller computes, according to the service path request of the first LSP, the routing information of the at least two second LSPs that are associated with the first LSP, and sends the service path computation result to the first node of the transport network. The service path computation result carries the routing information of the at least two second LSPs, and may further carry the associated object of the first LSP. The service establishment request of the first LSP sent to the network controller by the customer device, the customer controller, or the network management software may be a PCInitiate message. The service path computation result sent to the first node by the network controller may be a PCRpt message.

In this embodiment of the present invention, any one of the customer device, the network controller, or the first node may determine the service association attribute of the first LSP, that is, field information of the associated object of the first LSP, and the associated object of the first LSP is carried in a message of a protocol such as RSVP-TE or PCEP. In the transport network, in a process of establishing the first LSP, the at least two second LSPs that are associated with the first LSP are established, so as to ensure that service performance of any two second LSPs is similar or consistent, thereby improving service performance of the first LSP, and simplifying maintenance and management of a service path.

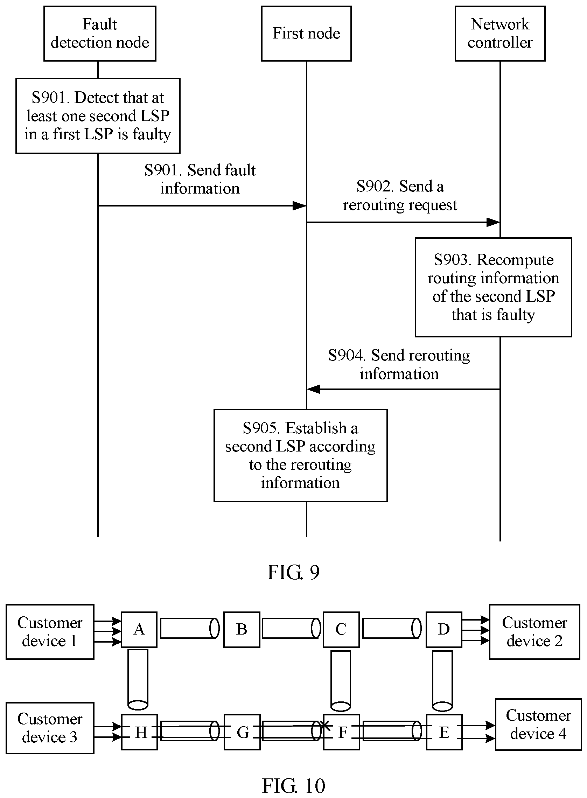

FIG. 9 is a signaling interaction flowchart of a service path fault processing method according to an embodiment of the present invention. As shown in FIG. 9, the method specifically includes the following steps.

S901. A node on a faulty link detects that at least one second LSP in a first LSP is faulty, and sends fault information to a first node.

For example, a network topology in FIG. 10 is the same as that in FIG. 5. It is assumed that an LSP with 200 Gbps bandwidth is established from a customer device 3 to a customer device 4 in a transport network in FIG. 10. The 200 Gbps LSP includes two 100 Gbps LSPs. A port for connecting a node F and a node G is faulty. This causes one of the two 100 Gbps LSPs to be faulty. After detecting that one 100 Gbps LSP is faulty, the node G sends fault information to a first node H. The fault information may carry a fault type, and may further carry rerouting policy information. The fault type may include a fiber fault, a node part fault, and the like. The rerouting policy may include separately performing rerouting on a second LSP that is faulty or performing rerouting on all second LSPs in the first LSP as a whole.

For example, the rerouting policy information may be determined and obtained by the node G according to the fault type, locally stored service association attribute information of an LSP, and/or the like. For example, the node G stores a service association attribute of the first LSP. This indicates an associated object of an association between one 200 Gbps LSP and two 100 Gbps LSPs. In this case, the fault type is the node part fault or a port fault, and only one 100 Gbps LSP is affected, and therefore the node G can determine that rerouting needs to be performed only on the 100 Gbps LSP.

In this embodiment, rerouting is performed only on a 100 Gbps LSP that is faulty. The first LSP may be one 200 Gbps LSP, and the second LSP may be two 100 Gbps LSPs.

S902. The first node sends a rerouting request to a network controller to request to perform rerouting on the second LSP that is faulty.

When the first node H sends the rerouting request to the network controller, the rerouting request may carry the rerouting policy information. The first node may obtain the rerouting policy information from the fault information, or the first node H may determine and obtain the rerouting policy information according to the fault type, the locally stored service association attribute information of an LSP, and/or the like. For a method for determining and obtaining the rerouting policy information by the first node H, refer to the node G. Details are not described herein.

S903. The network controller recomputes routing information of the second LSP that is faulty.

The network controller may obtain the rerouting policy information from the rerouting request sent by the first node H, or the network controller may determine and obtain the rerouting policy information according to the fault type, the locally stored service association attribute information of an LSP, and/or the like. For a method for determining and obtaining the rerouting policy information by the network controller, refer to the node G. Details are not described herein.

According to the rerouting policy information, the network controller recomputes routing information of an LSP that is faulty. For example, the network controller recomputes routing information of a 100 Gbps LSP that is faulty. The routing information may be H-G-F-E. The routing information is the same as an original path, but a new port is reallocated between G and F.

S904. The network controller sends rerouting information to the first node.

The network controller sends the rerouting information to the first node H. The rerouting information carries routing information of an LSP on which rerouting needs to be performed. For example, the routing information may be H-G-F-E. The routing information may further include information such as a port number and a used timeslot.

S905. The first node establishes a second LSP according to the rerouting information.

The first node H establishes the second LSP according to the routing information H-G-F-E. A new port number is used between G and F.

In this embodiment, when at least one second LSP included in the first LSP is faulty, any one of the fault detection node, the first node, or the network controller may determine the rerouting policy information according to the fault type and/or the service association attribute information of an LSP, and perform rerouting according to the rerouting policy information.

In this embodiment of the present invention, when at least one second LSP that is associated with the first LSP is faulty, rerouting may be performed on the at least one second LSP that is faulty, so as to simplify maintenance and management of a service path.

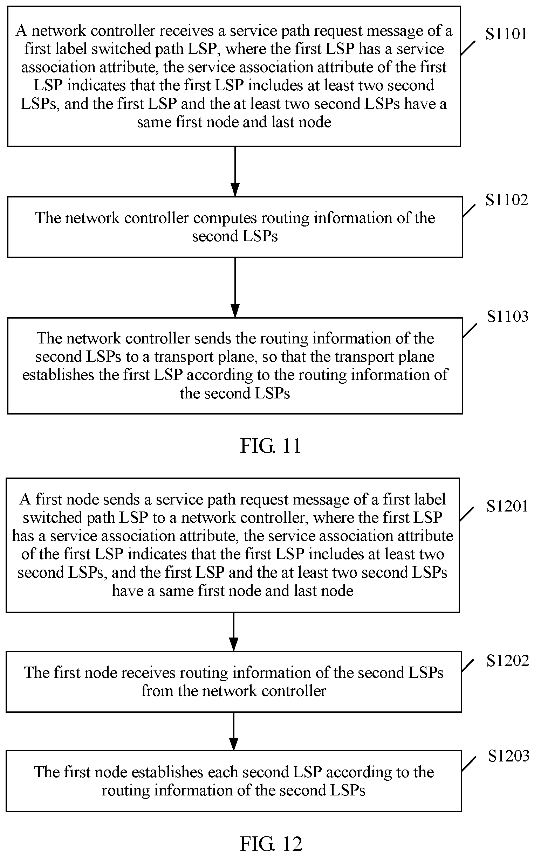

FIG. 11 is a schematic flowchart of a service path establishment method according to an embodiment of the present invention. The method may be performed by a network controller. The network controller may be a PCE, a computer, or a server. As shown in FIG. 11, the method includes the following steps.

S1101. The network controller receives a service path request message of a first label switched path LSP, where the first LSP has a service association attribute, the service association attribute of the first LSP indicates that the first LSP includes at least two second LSPs, and the first LSP and the at least two second LSPs have a same first node and last node.

The network controller may receive the service path request message of the first LSP from a first node of a transport network, or receive a service establishment request of the first LSP from any one of a customer device, a customer device controller, or network management software.

The service path request message of the first LSP received by the network controller may carry the service association attribute of the first LSP. The service association attribute of the first LSP may be represented by using an associated object of the PCEP protocol or the RSVP-TE protocol.

The service association attribute may include an association identifier, an association type, a quantity of associated members, and the like of the first LSP. The association identifier may be an identifier allocated to the first LSP by the network controller, the first node, or the customer device. The association type includes ensuring optimal service performance and ensuring that service performance falls within a threshold range. Ensuring optimal service performance means that the second LSPs have same routing information, and all first nodes, last nodes, intermediate nodes, and links that are passed through are the same. Ensuring that service performance falls within a threshold range means that first nodes and last nodes of the second LSPs are the same, and a service performance difference between any two second LSPs falls within a preset threshold range. The quantity of associated members is a quantity of second LSPs included in the first LSP.

S1102. The network controller computes routing information of the second LSPs.

The first LSP includes at least two second LSPs. Optionally, when the association type is ensuring optimal service performance, all the second LSPs in the first LSP have same routing information. That is, all nodes and links passed through by the second LSPs are the same. Service performance of all the second LSPs is ensured to be consistent as much as possible, so as to ensure service performance of the first LSP.

Optionally, when the association type is ensuring that service performance falls within a threshold range, it is not necessary to ensure that all the second LSPs have same routing information. Some second LSPs may be made to have same routing information, and other second LSPs have a same first node, a same last node, and a service performance difference within the preset threshold range. Alternatively, no second LSPs have same routing information, but any two second LSPs have a same first node, a same last node, and a service performance difference that needs to be within the preset threshold range. In this way, service performance of all the second LSPs is ensured to be similar, so as to ensure service performance of the first LSP.

S1103. The network controller sends the routing information of the second LSPs to a transport plane, so that the transport plane establishes the first LSP according to the routing information of the second LSPs.

When all the second LSPs in the first LSP are computed successfully, the network controller sends the routing information of all the second LSPs to the first node of the transport network. After all the second LSPs are established successfully, the first LSP is established successfully. If at least one second LSP in the first LSP fails to be computed, the network controller replies to the first node of the transport network with a message that the service path request of the first LSP fails.

Optionally, when the network controller determines the service association attribute of the first LSP, that is, when the first node fails to determine the service association attribute of the first LSP, an associated object of the first LSP may be further carried and is used to indicate the service association attribute of the first LSP when the network controller sends the routing information of the second LSPs to the first node of the transport network.

After the first LSP is established successfully, if at least one second LSP in the first LSP becomes faulty, the network controller may perform rerouting on the second LSP that becomes faulty, or may perform rerouting on all the second LSPs in the first LSP.

In this embodiment of the present invention, in a process of establishing the first LSP, the network controller establishes at least two second LSPs that are associated with the first LSP, so as to ensure that service performance of any two second LSPs is similar or consistent, thereby improving service performance of the first LSP, and simplifying maintenance and management of a service path.

FIG. 12 is a schematic flowchart of a service path establishment method according to an embodiment of the present invention. The method may be performed by a node device in a transport network, for example, a first node of an LSP in the transport network. The node device may be an OTN device, a WDM device, an SDH device, or the like. As shown in FIG. 12, the method includes the following steps.

S1201. A first node sends a service path request message of a first label switched path LSP to a network controller, where the first LSP has a service association attribute, the service association attribute of the first LSP indicates that the first LSP includes at least two second LSPs, and the first LSP and the at least two second LSPs have a same first node and last node.

The service path request message of the first LSP sent to the network controller by the first node may carry the service association attribute of the first LSP. The service association attribute of the first LSP may be represented by using an associated object of the RSVP-TE protocol.

The service association attribute may include an association identifier, an association type, a quantity of associated members, and the like of the first LSP. The association identifier may be an identifier allocated to the first LSP by the network controller, the first node, or a customer device. The association type includes ensuring optimal service performance and ensuring that service performance falls within a threshold range. Ensuring optimal service performance means that the second LSPs have same routing information, and all first nodes, last nodes, intermediate nodes, and links that are passed through are the same. Ensuring that service performance falls within a threshold range means that first nodes and last nodes of the second LSPs are the same, and a service performance difference between any two second LSPs falls within a preset threshold range. The quantity of associated members is a quantity of second LSPs included in the first LSP.

S1202. The first node receives routing information of the second LSPs from the network controller.

When all the second LSPs in the first LSP are computed successfully, the first node receives the routing information of all the second LSPs from the network controller. If at least one second LSP in the first LSP fails to be computed, the first node receives, from the network controller, a message that the service path request of the first LSP fails.

The first LSP includes at least two second LSPs. Optionally, when the association type is ensuring optimal service performance, all the second LSPs in the first LSP have same routing information. That is, all nodes and links passed through by the second LSPs are the same. Service performance of all the second LSPs is ensured to be consistent as much as possible, so as to ensure service performance of the first LSP.

Optionally, when the association type is ensuring that service performance falls within a threshold range, it is not necessary to ensure that all the second LSPs have same routing information. Some second LSPs may be made to have same routing information, and other second LSPs have a same first node, a same last node, and a service performance difference within the preset threshold range. Alternatively, no second LSPs have same routing information, but any two second LSPs have a same first node, a same last node, and a service performance difference that needs to be within the preset threshold range. In this way, service performance of all the second LSPs is ensured to be similar, so as to ensure service performance of the first LSP.

Optionally, when the network controller determines the service association attribute of the first LSP, that is, when the first node fails to determine the service association attribute of the first LSP, the routing information of the second LSPs received by the first node from the network controller may further carry an associated object of the first LSP that is used to indicate the service association attribute of the first LSP.

S1203. The first node establishes each second LSP according to the routing information of the second LSPs.

After receiving the routing information of the at least two second LSPs from the network controller, the first node may establish each second LSP by using a signaling protocol (for example, the RSVP-TE protocol). In the signaling protocol for establishing the second LSP, the associated object of the first LSP may be carried, so that each node passed through by the second LSP can obtain the associated object of the first LSP. After the nodes obtain associated object information, it is beneficial for the nodes to perform distributed management such as rerouting on the established LSPs.

After all the second LSPs are established successfully, the first LSP is established successfully. After the first LSP is established successfully, if at least one second LSP in the first LSP becomes faulty, the network controller may perform rerouting on the second LSP that becomes faulty, or may perform rerouting on all the second LSPs in the first LSP.

In this embodiment of the present invention, in a process of establishing the first LSP, the first node establishes at least two second LSPs that are associated with the first LSP, so as to ensure that service performance of any two second LSPs is similar or consistent, thereby improving service performance of the first LSP, and simplifying maintenance and management of a service path.

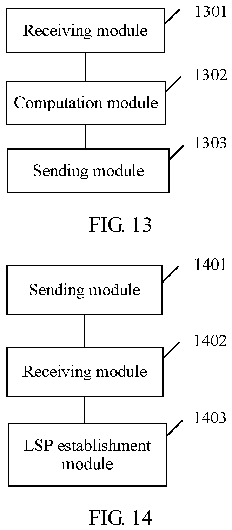

FIG. 13 is a schematic structural diagram of a network controller according to an embodiment of the present invention. The network controller may be a PCE, a computer, or a server. As shown in FIG. 13, the network controller includes: a receiving module 1301, a computation module 1302, and a sending module 1303.

The receiving module 1301 is configured to receive a service path request message of a first label switched path LSP, where the first LSP has a service association attribute, the service association attribute of the first LSP indicates that the first LSP includes at least two second LSPs, and the first LSP and the at least two second LSPs have a same first node and last node.

The service association attribute of the first LSP indicates a quantity of second LSPs included in the first LSP. The service association attribute of the first LSP may further indicate that all second LSPs in the first LSP have same routing information, that is, first nodes, intermediate nodes, last nodes, and links that are passed through by any two second LSPs are the same. The service association attribute of the first LSP may further indicate that first nodes and last nodes of any two second LSPs included in the first LSP are the same, and a service performance difference between any two second LSPs falls within a preset threshold range.

The computation module 1302 is configured to compute routing information of the second LSPs.

The sending module 1303 is configured to send the routing information of the second LSPs to a transport plane, so that the transport plane establishes the first LSP according to the routing information of the second LSPs.

The network controller shown in FIG. 13 may perform the steps in the method embodiments shown in FIG. 6, FIG. 9, and FIG. 11. Details are not described herein.

In this embodiment of the present invention, in a process of establishing the first LSP, the network controller establishes at least two second LSPs that are associated with the first LSP, so as to ensure that service performance of any two second LSPs is similar or consistent, thereby improving service performance of the first LSP, and simplifying maintenance and management of a service path.

FIG. 14 is a schematic structural diagram of a node device according to an embodiment of the present invention. The node device may be an OTN device, a WDM device, an SDH device, or the like. For an apparatus structure diagram of the node device, further refer to the embodiment shown in FIG. 4. The node device may be a first node of an LSP in a transport network. As shown in FIG. 14, the node device includes: a sending module 1401, a receiving module 1402, and an LSP establishment module 1403.

The sending module 1401 is configured to send a service path request message of a first label switched path LSP to a network controller, where the first LSP has a service association attribute, the service association attribute of the first LSP indicates that the first LSP includes at least two second LSPs, and the first LSP and the at least two second LSPs have a same first node and last node.

The service association attribute of the first LSP indicates a quantity of second LSPs included in the first LSP. The service association attribute of the first LSP may further indicate that all second LSPs in the first LSP have same routing information, that is, first nodes, intermediate nodes, last nodes, and links that are passed through by any two second LSPs are the same. The service association attribute of the first LSP may further indicate that first nodes and last nodes of any two second LSPs included in the first LSP are the same, and a service performance difference between any two second LSPs falls within a preset threshold range.

The receiving module 1402 is configured to receive routing information of the second LSPs from the network controller.

The LSP establishment module 1403 is configured to establish the first LSP according to the routing information of the second LSPs.

The node device shown in FIG. 14 may perform the steps in the method embodiments shown in FIG. 6, FIG. 9, and FIG. 12. Details are not described herein.

In this embodiment of the present invention, in a process of establishing the first LSP, the node device establishes at least two second LSPs that are associated with the first LSP, so as to ensure that service performance of any two second LSPs is similar or consistent, thereby improving service performance of the first LSP, and simplifying maintenance and management of a service path.

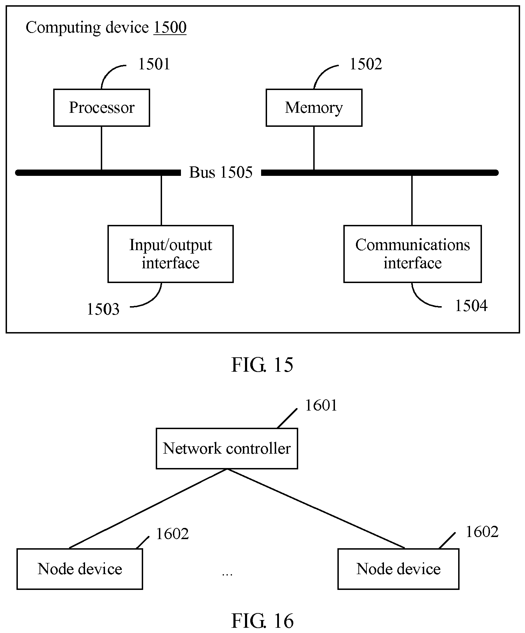

FIG. 15 is a schematic structural diagram of a computer device according to an embodiment of the present invention. As shown in FIG. 15, the computer device 1500 includes: a processor 1501, a memory 1502, an input/output interface 1503, a communications interface 1504, and a bus 1505. The processor 1501, the memory 1502, the input/output interface 1503, and the communications interface 1504 implement mutual communication connections by using the bus 1505.

The processor 1501 may use a general-purpose Central Processing Unit (CPU), a microprocessor, an Application-Specific Integrated Circuit (ASIC), or at least one integrated circuit to execute a related program, so as to implement the technical solution provided in this embodiment of the present invention.

The memory 1502 may be a Read-Only Memory (ROM), a static storage device, a dynamic storage device, or a Random Access Memory (RAM). The memory 1502 may store an operating system and another application program. When the technical solution provided in this embodiment of the present invention is implemented by software or firmware, program code used to implement the technical solution provided in this embodiment of the present invention is stored in the memory 1502, and is executed by the processor 1501.

The input/output interface 1503 is configured to receive input data and information, and output data such as an operation result.

The communications interface 1504 implements communication between the computer device 1500 and another device or a communications network by using a transceiver apparatus including but not limited to a transceiver.

The bus 1505 may include a channel, configured to transfer information between components (such as the processor 1501, the memory 1502, the input/output interface 1503, and the communications interface 1504) of the computer device 1500.

A network controller receives a service path request message of a first label switched path LSP by using the communications interface 1504, where the first LSP has a service association attribute, the service association attribute of the first LSP indicates that the first LSP includes at least two second LSPs, and the first LSP and the at least two second LSPs have a same first node and last node.

The network controller uses the processor 1501 to execute the code stored in the memory 1502, so as to compute routing information of the second LSPs.

The network controller sends the routing information of the second LSPs to a transport plane by using the communications interface 1504, so that the transport plane establishes the first LSP according to the routing information of the second LSPs.

A node device sends a service path request message of a first label switched path LSP to the network controller by using the communications interface 1504, where the first LSP has a service association attribute, the service association attribute of the first LSP indicates that the first LSP includes at least two second LSPs, and the first LSP and the at least two second LSPs have a same first node and last node.

The node device receives routing information of the second LSPs from the network controller by using the communications interface 1504, and uses the processor 1501 to execute the code stored in the memory 1502, so as to establish each second LSP according to the routing information of the second LSPs.

Specifically, the computer device 1500 shown in FIG. 15 can implement the steps in the method embodiments shown in FIG. 6, FIG. 9, FIG. 11, and FIG. 12. It should be noted that, although for the computer device 1500, merely the processor 1501, the memory 1502, the input/output interface 1503, the communications interface 1504, and the bus 1505 are shown in FIG. 15, in a specific implementation process, a person skilled in the art should understand that the computer device 1500 further includes another component required for normal running. In addition, a person skilled in the art should understand that, according to a specific requirement, the computer device 1500 may further include a hardware component that implements another additional function. In addition, a person skilled in the art should understand that the computer device 1500 may include only a component required for implementing this embodiment of the present invention, and does not need to include all components shown in FIG. 15.

In this embodiment of the present invention, in a process of establishing the first LSP, the network controller and/or the node device establish/establishes at least two second LSPs that are associated with the first LSP, so as to ensure that service performance of any two second LSPs is similar or consistent, thereby improving service performance of the first LSP, and simplifying maintenance and management of a service path.

FIG. 16 is a schematic structural diagram of a network system according to an embodiment of the present invention. As shown in FIG. 16, the network system includes a network controller 1601 and at least two node devices 1602. The network controller 1601 can perform the steps in the method embodiments shown in FIG. 6, FIG. 9, and FIG. 11. For a structure and a function of the network controller 1601, refer to the embodiments shown in FIG. 13 and FIG. 15. The node device 1602 can perform the steps in the method embodiments shown in FIG. 6, FIG. 9, and FIG. 12. For a structure and a function of the node device 1602, refer to the embodiments shown in FIG. 4, FIG. 14, and FIG. 15.

The network controller 1601 is configured to receive a service path request message of a first label switched path LSP, where the first LSP has a service association attribute, the service association attribute of the first LSP indicates that the first LSP includes at least two second LSPs, and the first LSP and the at least two second LSPs have a same first node and last node; configured to compute routing information of the second LSPs; and further configured to send the routing information of the second LSPs to a transport plane, so that the transport plane establishes the first LSP according to the routing information of the second LSPs.

The node device 1602 is configured to send a service path request message of a first label switched path LSP to a network controller, where the first LSP has a service association attribute, the service association attribute of the first LSP indicates that the first LSP includes at least two second LSPs, and the first LSP and the at least two second LSPs have a same first node and last node; receive routing information of the second LSPs from the network controller; and further configured to establish the first LSP according to the routing information of the second LSPs.

In this embodiment of the present invention, in a process of establishing the first LSP, the network controller and/or the node device establish/establishes at least two second LSPs that are associated with the first LSP, so as to ensure that service performance of any two second LSPs is similar or consistent, thereby improving service performance of the first LSP, and simplifying maintenance and management of a service path.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service path establishment method, wherein the method comprises:
receiving (S1101), by a network controller, a service path request message of a first label switched path, LSP, wherein the first LSP has a service association attribute, the service association attribute of the first LSP indicates that the first LSP comprises at least two second LSPs, and the first LSP and the at least two second LSPs have a same first node and last node;
computing (S1102), by the network controller, routing information of the second LSPs; and
sending (S1103), by the network controller, the routing information of the second LSPs to a first node, so that the first node establishes the first LSP according to the routing information of the second LSPs.

2. The method according to claim 1, wherein the service association attribute of the first LSP indicates a quantity of second LSPs comprised in the first LSP.

3. The method according to claim 1, wherein the service association attribute of the first LSP indicates that the second LSPs comprised in the first LSP have same routing information.

4. The method according to claim 1, wherein the service association attribute of the first LSP indicates that a service performance difference between any two second LSPs comprised in the first LSP falls within a preset threshold range.

5. The method according to any one of claims 1 to 4, wherein the method further comprises:
when route computation for at least any second LSP that is associated with the first LSP fails, determining, by the network controller, that the service path request message of the first LSP fails.

6. A service path establishment method, wherein the method comprises:
sending (S1201), by a first node, a service path request message of a first label switched path LSP to a network controller, wherein the first LSP has a service association attribute, the service association attribute of the first LSP indicates that the first LSP comprises at least two second LSPs, and the first LSP and the at least two second LSPs have a same first node and last node;
receiving (S1202), by the first node, routing information of the second LSPs from the network controller; and
establishing (S1203), by the first node, the first LSP according to the routing information of the second LSPs.

7. The method according to claim 6, wherein the service association attribute of the first LSP indicates a quantity of second LSPs comprised in the first LSP.

8. The method according to claim 6, wherein the service association attribute of the first LSP indicates that the second LSPs comprised in the first LSP have same routing information.

9. The method according to claim 6, wherein the service association attribute of the first LSP indicates that a service performance difference between any two second LSPs comprised in the first LSP falls within a preset threshold range.

10. The method according to any one of claims 6 to 9, wherein the method further comprises:
learning, by the first node, that at least one second LSP in the first LSP is faulty, and sending a rerouting request message to the network controller, wherein the rerouting request message instructs to re-establish the at least one second LSP that is faulty.

11. A network controller, wherein the network controller comprises:
a receiving module (1301), configured to receive a service path request message of a first label switched path LSP, wherein the first LSP has a service association attribute, the service association attribute of the first LSP indicates that the first LSP comprises at least two second LSPs, and the first LSP and the at least two second LSPs have a same first node and last node;
a computation module (1302), configured to compute routing information of the second LSPs; and
a sending module (1303), configured to send the routing information of the second LSPs to a first node, so that the first node establishes the first LSP according to the routing information of the second LSPs.

12. The network controller according to claim 11, wherein the service association attribute of the first LSP indicates one of the following:
a quantity of second LSPs comprised in the first LSP;
the second LSPs comprised in the first LSP have same routing information; and,
a service performance difference between any two second LSPs comprised in the first LSP falls within a preset threshold range.

13. The network controller according to any one of claims 11 to 12, wherein the network controller further comprises:
a determining module, configured to: when route computation for at least any second LSP that is associated with the first LSP fails, determine that the service path request of the first LSP fails.

14. Anode device, wherein the node device comprises:
a sending module (1401), configured to send a service path request message of a first label switched path LSP to a network controller, wherein the first LSP has a service association attribute, the service association attribute of the first LSP indicates that the first LSP comprises at least two second LSPs, and the first LSP and the at least two second LSPs have a same first node and last node;
a receiving module (1402), configured to receive routing information of the second LSPs from the network controller; and
an LSP establishment module (1403), configured to establish the first LSP according to the routing information of the second LSPs.

15. The node device according to claim 14, wherein the service association attribute of the first LSP indicates one of the following:
a quantity of second LSPs comprised in the first LSP;
the second LSPs comprised in the first LSP have same routing information; and,
a service performance difference between any two second LSPs comprised in the first LSP falls within a preset threshold range.

## Patentansprüche

1. Dienstpfadeinrichtungsverfahren, wobei das Verfahren Folgendes umfasst:
Empfangen (S1101) durch eine Netzsteuereinheit einer Dienstpfadanforderungsnachricht eines ersten etikettenvermittelten Pfads, LSP, wobei der erste LSP ein Dienstzuordnungsmerkmal besitzt, das Dienstzuordnungsmerkmal des ersten LSP angibt, dass der erste LSP mindestens zwei zweite LSPs umfasst, und der erste LSP und die mindestens zwei zweiten LSPs denselben ersten Knoten und letzten Knoten besitzen;
Berechnen (S1102) durch die Netzsteuereinheit von Leitinformationen der zweiten LSPs und
Senden (S1103) durch die Netzsteuereinheit der Leitinformationen der zweiten LSPs zu einem ersten Knoten derart, dass der erste Knoten den ersten LSP gemäß den Leitinformationen der zweiten LSPs einrichtet.

2. Verfahren nach Anspruch 1, wobei das Dienstzuordnungsmerkmal des ersten LSP eine Anzahl von zweiten LSPs, die im ersten LSP enthalten sind, angibt.

3. Verfahren nach Anspruch 1, wobei das Dienstzuordnungsmerkmal des ersten LSP angibt, dass die zweiten LSPs, die im ersten LSP enthalten sind, dieselben Leitinformationen besitzen.

4. Verfahren nach Anspruch 1, wobei das Dienstzuordnungsmerkmal des ersten LSP angibt, dass eine Dienstleistungsfähigkeitsdifferenz zwischen beliebigen zwei zweiten LSPs, die im ersten LSP enthalten sind, in einen voreingestellten Schwellenwertbereich fällt.

5. Verfahren nach einem der Ansprüche 1 bis 4, wobei das Verfahren ferner Folgendes umfasst:
Bestimmen dann, wenn eine Routenberechnung für mindestens einen beliebigen zweiten LSP, der mit dem ersten LSP verbunden ist, scheitert, durch die Netzsteuereinheit, dass die Dienstpfadanforderungsnachricht des ersten LSP scheitert.

6. Dienstpfadeinrichtungsverfahren, wobei das Verfahren Folgendes umfasst:
Senden (S1201) durch einen ersten Knoten einer Dienstpfadanforderungsnachricht eines ersten etikettenvermittelten Pfads, LSP, zu einer Netzsteuereinheit, wobei der erste LSP ein Dienstzuordnungsmerkmal besitzt, das Dienstzuordnungsmerkmal des ersten LSP angibt, dass der erste LSP mindestens zwei zweite LSPs umfasst, und der erste LSP und die mindestens zwei zweiten LSPs denselben ersten Knoten und letzten Knoten besitzen;
Empfangen (S1202) durch den ersten Knoten von Leitinformationen der zweiten LSPs von der Netzsteuereinheit und
Einrichten (S1203) durch den ersten Knoten des ersten LSP gemäß den Leitinformationen der zweiten LSPs.

7. Verfahren nach Anspruch 6, wobei das Dienstzuordnungsmerkmal des ersten LSP eine Anzahl von zweiten LSPs, die im ersten LSP enthalten sind, angibt.

8. Verfahren nach Anspruch 6, wobei das Dienstzuordnungsmerkmal des ersten LSP angibt, dass die zweiten LSPs, die im ersten LSP enthalten sind, dieselben Leitinformationen besitzen.

9. Verfahren nach Anspruch 6, wobei das Dienstzuordnungsmerkmal des ersten LSP angibt, dass eine Dienstleistungsfähigkeitsdifferenz zwischen beliebigen zwei zweiten LSPs, die im ersten LSP enthalten sind, in einen voreingestellten Schwellenwertbereich fällt.

10. Verfahren nach einem der Ansprüche 6 bis 9, wobei das Verfahren ferner Folgendes umfasst:
Lernen durch den ersten Knoten, dass mindestens ein zweiter LSP im ersten LSP fehlerhaft ist, und Senden einer Umleitungsanforderungsnachricht zur Netzsteuereinheit, wobei die Umleitungsanforderungsnachricht anweist, den mindestens einen zweiten LSP, der fehlerhaft ist, erneut aufzubauen.

11. Netzsteuereinheit, wobei die Netzsteuereinheit Folgendes umfasst:
ein Empfangsmodul (1301), das konfiguriert ist zum Empfangen einer Dienstpfadanforderungsnachricht eines ersten etikettenvermittelten Pfads, LSP, wobei der erste LSP ein Dienstzuordnungsmerkmal besitzt, das Dienstzuordnungsmerkmal des ersten LSP angibt, dass der erste LSP mindestens zwei zweite LSPs umfasst, und der erste LSP und die mindestens zwei zweiten LSPs denselben ersten Knoten und letzten Knoten besitzen;
ein Berechnungsmodul (1302), das konfiguriert ist zum Berechnen von Leitinformationen der zweiten LSPs und
ein Sendemodul (1303), das konfiguriert ist zum Senden der Leitinformationen der zweiten LSPs zu einem ersten Knoten derart, dass der erste Knoten den ersten LSP gemäß den Leitinformationen der zweiten LSPs einrichtet.

12. Netzsteuereinheit nach Anspruch 11, wobei das Dienstzuordnungsmerkmal des ersten LSP Folgendes angibt:
eine Anzahl von zweiten LSPs, die im ersten LSP enthalten sind; oder
die zweiten LSPs, die im ersten LSP enthalten sind, besitzen dieselben Leitinformationen; oder
eine Dienstleistungsfähigkeitsdifferenz zwischen beliebigen zwei zweiten LSPs, die im ersten LSP enthalten sind, fällt in einen voreingestellten Schwellenwertbereich.

13. Netzsteuereinheit nach einem der Ansprüche 11 bis 12, wobei die Netzsteuereinheit ferner Folgendes umfasst:
ein Bestimmungsmodul, das konfiguriert ist zum Bestimmen dann, wenn eine Routenberechnung für mindestens einen beliebigen zweiten LSP, der mit dem ersten LSP verbunden ist, scheitert, dass die Dienstpfadanforderung des ersten LSP scheitert.

14. Knotenvorrichtung, wobei die Knotenvorrichtung Folgendes umfasst:
ein Sendemodul (1401), das konfiguriert ist zum Senden einer Dienstpfadanforderungsnachricht eines ersten etikettenvermittelten Pfads, LSP, zu einer Netzsteuereinheit, wobei der erste LSP ein Dienstzuordnungsmerkmal besitzt, das Dienstzuordnungsmerkmal des ersten LSP angibt, dass der erste LSP mindestens zwei zweite LSPs umfasst, und der erste LSP und die mindestens zwei zweiten LSPs denselben ersten Knoten und letzten Knoten besitzen;
ein Empfangsmodul (1402), das konfiguriert ist zum Empfangen von Leitinformationen der zweiten LSPs von der Netzsteuereinheit und
ein LSP-Einrichtungsmodul (1403), das konfiguriert ist zum Einrichten des ersten LSP gemäß den Leitinformationen der zweiten LSPs.

15. Knotenvorrichtung nach Anspruch 14, wobei das Dienstzuordnungsmerkmal des ersten LSP Folgendes angibt:
eine Anzahl von zweiten LSPs, die im ersten LSP enthalten sind; oder
die zweiten LSPs, die im ersten LSP enthalten sind, besitzen dieselben Leitinformationen; oder
eine Dienstleistungsfähigkeitsdifferenz zwischen beliebigen zwei zweiten LSPs, die im ersten LSP enthalten sind, fällt in einen voreingestellten Schwellenwertbereich.

## Revendications

1. Procédé d'établissement de chemin de service, le procédé comprenant :
la réception (S1101), par un contrôleur de réseau, d'un message de requête de chemin de service d'un premier chemin commuté par étiquettes, LSP, le premier LSP possédant un attribut d'association de service, l'attribut d'association de service du premier LSP indiquant que le premier LSP comprend au moins deux seconds LSP, et le premier LSP et les au moins deux seconds LSP ont un même premier nœud et un même dernier nœud ;
le calcul (S1102), par le contrôleur de réseau, d'informations de routage des seconds LSP; et
l'envoi (S1103), par le contrôleur de réseau, des informations de routage des seconds LSP à un plan de transport, de telle sorte que le plan de transport établisse le premier LSP conformément aux informations de routage des seconds LSP.

2. Procédé selon la revendication 1, dans lequel l'attribut d'association de service du premier LSP indique une quantité de seconds LSP compris dans le premier LSP.

3. Procédé selon la revendication 1, dans lequel l'attribut d'association de service du premier LSP indique que les seconds LSP compris dans le premier LSP ont des informations de routage identiques.

4. Procédé selon la revendication 1, dans lequel l'attribut d'association de service du premier LSP indique qu'une différence de performance de service entre n'importe quels deux seconds LSP compris dans le premier LSP est comprise dans une plage de seuil prédéfinie.

5. Procédé selon l'une quelconque des revendications 1 à 4, le procédé comprenant en outre
quand des informations de route pour au moins n'importe quel second LSP associé au premier LSP échouent, la détermination, par le contrôleur de réseau, que le message de requête de chemin de service du premier LSP échoue.

6. Procédé d'établissement de chemin de service, le procédé comprenant :
l'envoi (S1201), par un premier nœud, d'un message de requête de chemin de service d'un premier chemin commuté par étiquettes LSP à un contrôleur de réseau, le premier LSP possédant un attribut d'association de service, l'attribut d'association de service du premier LSP indiquant que le premier LSP comprend au moins deux seconds LSP, et le premier LSP et les au moins deux seconds LSP ont un même premier nœud et un même dernier nœud ;
la réception (S1202), par le premier nœud, d'informations de routage des seconds LSP à partir du contrôleur de réseau ; et
l'établissement (S1203), par le premier nœud, du premier LSP conformément aux informations de routage des seconds LSP.

7. Procédé selon la revendication 6, dans lequel l'attribut d'association de service du premier LSP indique une quantité de seconds LSP compris dans le premier LSP.

8. Procédé selon la revendication 6, dans lequel l'attribut d'association de service du premier LSP indique que les seconds LSP compris dans le premier LSP ont des informations de routage identiques.

9. Procédé selon la revendication 6, dans lequel l'attribut d'association de service du premier LSP indique qu'une différence de performance de service entre n'importe quels deux seconds LSP compris dans le premier LSP est comprise dans une plage de seuil prédéfinie.

10. Procédé selon l'une quelconque des revendications 6 à 9, le procédé comprenant en outre
la réalisation, par le premier nœud, qu'au moins un second LSP dans le premier LSP est défaillant, et l'envoi d'un message de requête de reroutage au contrôleur de réseau, le message de requête de reroutage ordonnant d'établir à nouveau l'au moins un second LSP qui est défaillant.

11. Contrôleur de réseau, le contrôleur de réseau comprenant :
un module de réception (1301), configuré pour recevoir un message de requête de chemin de service d'un premier chemin commuté par étiquettes LSP, dans lequel le premier LSP possède un attribut d'association de service, l'attribut d'association de service du premier LSP indiquant que le premier LSP comprend au moins deux seconds LSP, et le premier LSP et les au moins deux seconds LSP ont un même premier nœud et un même dernier nœud,
un module de calcul (1302), configuré pour calculer des informations de routage des seconds LSP ; et
un module d'envoi (1303), configuré pour envoyer les informations de routage des seconds LSP à un plan de transport, de telle sorte que le plan de transport établisse le premier LSP conformément aux informations de routage des seconds LSP.

12. Contrôleur de réseau selon la revendication 11, dans lequel l'attribut d'association de service du premier LSP indique une des informations suivantes:
une quantité de seconds LSP compris dans le premier LSP ;
les seconds LSP compris dans le premier LSP ont des informations de routage identiques; et,
une différence de performance de service entre n'importe quels deux seconds LSP compris dans le premier LSP est comprise dans une plage de seuil prédéfinie.

13. Contrôleur de réseau selon l'une quelconque des revendications 11 à 12, le contrôleur de réseau comprenant en outre :
un module de détermination, configuré pour : quand des informations de route pour au moins n'importe quel second LSP associé au premier LSP échouent, déterminer que la requête de chemin de service du premier LSP échoue.

14. Dispositif nodal, le dispositif nodal comprenant :
un module d'envoi (1401), configuré pour envoyer un message de requête de chemin de service d'un premier chemin commuté par étiquettes LSP à un contrôleur de réseau, le premier LSP possédant un attribut d'association de service, l'attribut d'association de service du premier LSP indiquant que le premier LSP comprend au moins deux seconds LSP, et le premier LSP et les au moins deux seconds LSP ont un même premier nœud et un même dernier nœud ;
un module de réception (1402), configuré pour recevoir des informations de routage des seconds LSP à partir du contrôleur de réseau ; et
un module d'établissement de LSP (1403), configuré pour établir le premier LSP conformément aux informations de routage des seconds LSP.

15. Dispositif nodal selon la revendication 14, dans lequel l'attribut d'association de service du premier LSP indique une des informations suivantes :
une quantité de seconds LSP compris dans le premier LSP ;
les seconds LSP compris dans le premier LSP ont des informations de routage identiques; et,
une différence de performance de service entre n'importe quels deux seconds LSP compris dans le premier LSP est comprise dans une plage de seuil prédéfinie.
